# FASCICULE DE BREVET EUROPEEN

(11) **EP 0 888 065 B1**
(45) Date de publication et mention de la délivrance du brevet: **13.06.2001**
(21) Numéro de dépôt: 97908321.9
(22) Date de dépôt: 07.03.1997
(51) Int. Cl.: A22C 7/00, A47J 27/20

(54) **UNITE ET INSTALLATION DE MOULAGE ET DE TRAITEMENT THERMIQUE DE PRODUITS ALIMENTAIRES**
EINHEIT UND VORRICHTUNG ZUM FORMEN UND WÄRMEBEHANDELN VON NAHRUNGSPRODUKTEN
UNIT AND PLANT FOR THE MOULDING AND HEAT TREATMENT OF FOOD PRODUCTS

(30) Priorité: 18.03.1996 FR 9603556
(43) Date de publication de la demande: 07.01.1999
(73) Titulaire: KAUFLER S.A., F-22600 Loudeac (FR)
(72) Inventeur: CHAMPALAUNE, Jean-Claude, F-35290 Saint-Méen-le-Grand (FR); CORVELER, Yvon, F-56300 Pontivy (FR)
(74) Mandataire: Branger, Jean-Yves
(86) Numéro de dépôt international: FR9700407
(87) Numéro de publication internationale: WO9734494

(56) Documents cités:
- EP-A- 0 292 417
- EP-A- 0 625 325
- DE-A- 3 315 311
- FR-A- 2 581 840
- FR-A- 2 672 270
- US-A- 2 310 956
- US-A- 3 796 144

## Description

La présente invention se rapporte à une unité de moulage et de traitement thermique de produits alimentaires, par exemple pour la cuisson de jambons.

Elle concerne également une installation composée de plusieurs unités de moulage de ce type.

On a déjà proposé des unités de moulage de produits alimentaires, en particulier pour la cuisson de jambons.

De manière typique, une unité de ce genre comprend un ensemble de moules en forme de goulottes disposées horizontalement, côte-à-côte et parallèlement les unes aux autres, leur fond étant dirigé vers le bas et leur ouverture vers le haut. Cet ensemble de moules est fixé à des moyens de support qui autorisent l'empilage de plusieurs unités les unes sur les autres.

Le document FR-A-2 672 270, au nom de la demanderesse, se rapporte à une unité de ce genre.

Dans certaines formes de réalisation, chaque goulotte est solidaire d'une plaque formant double fond, qui s'étend sous son fond. Les plaques double-fonds jouent le rôle d'éléments de couvercle aptes à venir s'engager dans les ouvertures de goulotte d'une unité sous-jacente dans un empilage.

L'utilisation de couvercles est utile notamment pour la cuisson de jambons, car la viande se trouve ainsi confinée à l'intérieur d'un volume bien défini dans lequel elle est maintenue sous une certaine pression qui va éliminer les manques de matière et déterminer sa forme définitive.

Pour procéder au traitement thermique des produits alimentaires, en l'occurrence à la cuisson des jambons, on utilise principalement jusqu'ici deux techniques.

La première fait usage de chambres, cellules ou tunnels de cuisson.Il s'agit d'enceintes de dimensions adaptées pour recevoir au moins un "chariot", ce terme désignant, dans le domaine d'activité concerné, un ensemble de plusieurs unités de moulage empilées et déplaçables sur une voie de roulement. Généralement, l'enceinte est dimensionnée pour contenir de deux à douze chariots.

Pour procéder à la cuisson de jambons, on utilise généralement de la vapeur d'eau, qui est diffusée dans l'enceinte.

Une telle installation, qui suppose une bonne isolation thermique de l'enceinte, et met en oeuvre des ventilateurs pour le brassage de la vapeur servant à la cuisson, est coûteuse en prix de revient, et en entretien.

De plus, il se pose un problème lié au contact entre le fluide caloporteur - en l'occurrence la vapeur d'eau - et les produits à traiter, ce qui constitue un risque de contamination microbienne des produits.

La seconde technique utilise des cuves ou marmites de cuisson de forme généralement parallélépipèdique et munies d'un couvercle. La cuisson se fait par de l'eau chaude. Celle-ci est chauffée soit à l'aide d'un dispositif annexe tel qu'une chaudière, soit dans la cuve elle-même, par échange thermique ou par injection de vapeur.

De telles cuves sont d'un usage peu commode car il est nécessaire d'y charger les unités de cuisson par le haut, par exemple en utilisant un palan ou un pont roulant.

De plus, le problème de contamination se rencontre également avec ce procédé.

On décrit par ailleurs dans EP-A-0 292 417 une unité de moulage et de traitement thermique du même type général que celle décrite plus haut.

Dans cette unité, des plaques sont prévues sous le fond des goulottes. Les intervalles entre les plaques coïncident avec les positions verticales des goulottes. Les plaques superposées définissent des couloirs de circulation longitudinaux et transversaux alternés pour un fluide de chauffage. Leur but est de permettre une meilleure homogénéité des échanges thermique.

Ces couloirs ne résolvent pas le problème qui consiste à éviter le contact entre le fluide caloporteur et les produits alimentaires.

La présente invention a pour but de remédier à ces inconvénients.

Plus précisément, un premier objectif de l'invention est de fournir une unité de moulage de produits alimentaires qui soit pourvue elle-même de moyens aptes à réaliser le traitement thermique des produits. Ce faisant, on diminue sensiblement le prix de revient de l'opération.

Un deuxième objectif est de pouvoir réaliser ce traitement sans qu'il y ait contact entre le fluide caloporteur et les produits alimentaires, de manière à éliminer pratiquement tout risque de contamination.

L'invention vise également à atteindre ces objectifs à l'aide de moyens simples, peu coûteux et faciles à utiliser.

Pour ce faire, la demanderesse a mis à profit l'espace "mort", c'est à dire non utilisé, qui est situé, dans les unités connues, entre le fond d'une goulotte et l'élément de couvercle (double-fond) disposé sous ce fond.

L'unité de moulage et de traitement thermique qui fait l'objet de la présente invention, comprend un ensemble de moules en forme de goulottes disposées horizontalement, côte-à-côte et parallèlement les unes aux autres, leur fond étant dirigé vers le bas et leur ouverture vers le haut, et à chaque goulotte est associé un élément de couvercle qui s'étend en-dessous de son fond, cet ensemble de moules étant fixé à des moyens de support qui autorisent l'empilage des unités, les éléments de couvercle venant alors s'engager dans les ouvertures de goulotte d'une unité sous-jacente.

De plus, aussi bien les goulottes que les éléments de couvercle sont réalisés dans un matériau thermiquement bon conducteur.

Conformément à l'invention, cette unité est remarquable en ce que chaque goulotte est fixée à l'élément de couvercle associé de manière à délimiter un conduit étanche - dit élémentaire - apte à recevoir un fluide caloporteur pour le traitement, par échange thermique, des produits alimentaires contenus dans lesdites goulottes.

Il est ainsi ménagé autour de chaque goulotte un espace étanche où on fait circuler un fluide caloporteur tel que de l'eau, de l'huile ou de la vapeur, par exemple.

Ainsi le traitement thermique, par exemple la cuisson des produits, se fait de manière efficace et homogène car une grande partie, voire la totalité des produits est entourée par le fluide caloporteur.

Dans un mode de réalisation préféré, chacun de ces conduits élimentaires s'étend non seulement sous la goulotte associée, mais aussi le long de ses flancs latéraux, de sorte que c'est l'intégralité de la paroi de la goulotte (toute la périphérie de la section) qui est exposée à l'échange thermique avec le fluide caloporteur.

Chaque conduit élémentaire entoure ainsi complètement - ou à peu près complètement - la paroi de la goulotte correspondante.

Comme, par ailleurs, le couvercle de l'unité supérieure, qui constitue une portion de la paroi du conduit de cette unité, s'engage dans l'ouverture de la goulotte, c'est l'ensemble du produit contenu dans celle-ci qui est cerné par le fluide caloporteur.

Selon d'autres caractéristiques avantageuses, mais non limitatives de l'invention :
- les différents conduits élémentaires délimités par une goulotte et un élément de couvercle associé communiquent entre eux de manière à former, au sein de l'unité, un seul et même conduit ;
- les conduits élémentaires sont divisés par une cloison intermédiaire et interrompue ;
- ladite cloison s'étend longitudinalement sous la goulotte associée et a une longueur inférieure à celle de la goulotte, de manière à ménager un passage à une extrémité de la cloison pour le fluide caloporteur ;
- lesdits passages d'extrémité sont disposés de manière alternée de manière à favoriser une circulation du fluide selon un parcours en chicane ;
- l'unité comporte des embouts de raccordement à une source d'alimentation en fluide caloporteur et à des moyens d'évacuation de ce fluide;
- les parois transversales dudit conduit comportent chacune au moins un trou borgne débouchant vers l'extérieur, apte à permettre la prise et la manipulation de l'unité.

La présente invention se rapporte également à une installation de moulage et de traitement thermique de produits alimentaires, notamment pour la cuisson de jambons, qui se caractérise par le fait qu'elle comporte plusieurs unités empilées telles que celles décrites ci-dessus et qu'elle est équipée d'une source d'alimentation en fluide caloporteur et de moyens d'évacuation de ce fluide, sur lesquels chaque unité est connectée.

Selon une forme de réalisation de cette installation, le fluide consiste en un liquide chaud apte à cuire lesdits produits alimentaires.

Selon une autre forme de réalisation, le fluide consiste en un liquide froid apte à refroidir et/ou congeler lesdits produits alimentaires.

D'autres caractéristiques et avantages de la présente invention apparaîtront à la lecture de la description détaillée qui va suivre, d'un mode de réalisation préférentiel. Cette description, donnée à titre d'exemple non limitatif, sera faite en référence aux dessins dans lesquels :
- la figure 1 est une vue en coupe transversale d'une unité conforme à l'invention;
- la figure 2 est une vue de dessus de l'unité de la figure 1, sur laquelle le plan de coupe I-I de la figure 1 a été repéré ;
- la figure 3 est encore un schéma de dessus de l'unité de la figure 1, mais coupée selon le plan de coupe horizontal III-III ;
- la figure 4 est aussi une vue de la même unité, selon le plan de coupe IV-IV de la figure 2 ;
- la figure 5 est une vue simplifiée en perspective d'une installation formée de plusieurs unités conformes à l'invention.

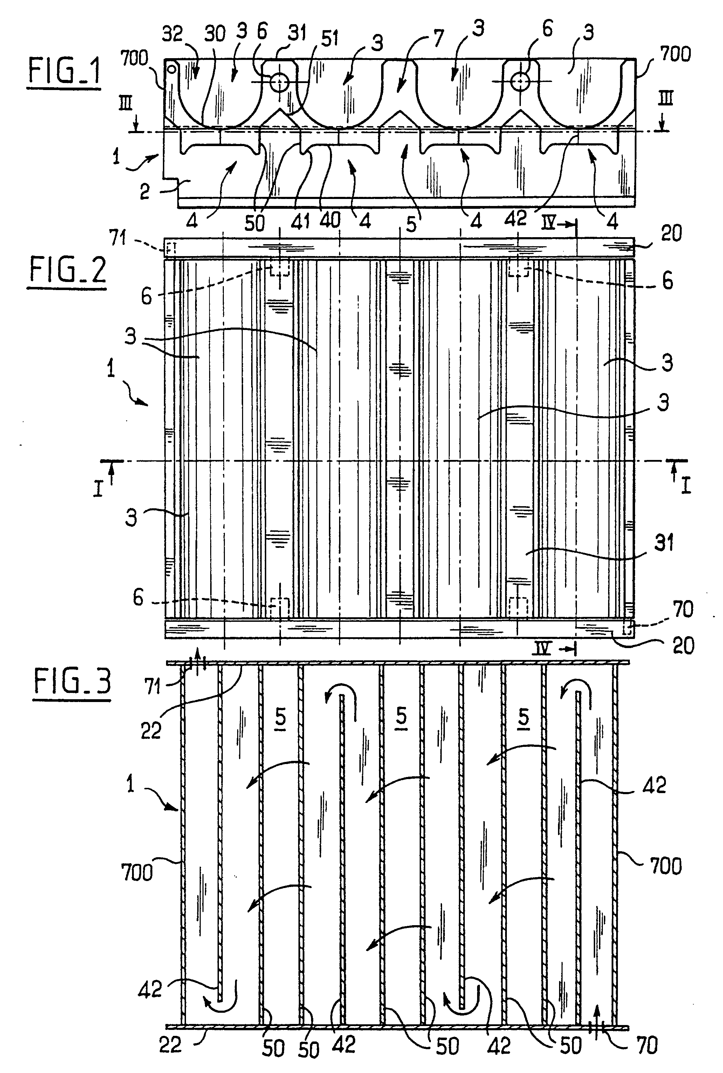

L'unité de moulage 1 représentée sur les figures 1 à 4, comprend quatre moules métalliques 3 en forme de goulottes. Celles-ci ont une section transversale ayant la forme d'un "U", dont l'ouverture 32 est dirigée vers le haut, et le fond semi-cylindrique 30 vers le bas. Leurs flancs sont sensiblement verticaux et leur bord supérieur est replié vers l'extérieur. A ce niveau, elles sont reliées deux à deux par une bande longitudinale 31.

A chacune de leurs extrémités, les goulottes 3 sont fixées par soudage à un flasque 2. Il s'agit de plaques en tôle à pliage multiple, dont la partie inférieure 23 s'étend vers le bas, bien en dessous des goulottes, et est décalée vers l'extérieur.

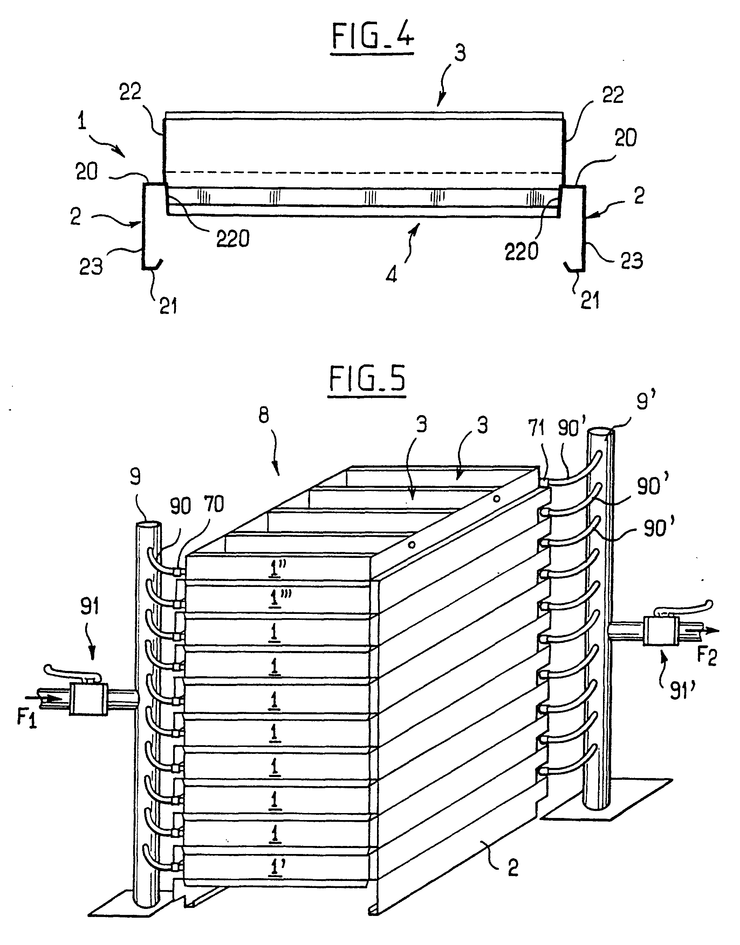

L'extrémité basse des flasques (figure 4) est repliée vers l'intérieur pour former des faces d'appui horizontales 21 destinées à venir en appui sur des faces intermédiaires horizontales 20, qui correspondent au décrochement vers l'extérieur de la zone médiane des flasques.

La partie supérieure 22 des flasques fait office de cloison obturant l'extrémité des goulottes.

Ainsi, on peut empiler les unités du moulage les unes sur les autres, les faces d'appui 21 d'une unité venant se positionner et prendre appui sur les faces 20 de l'unité sous-jacente.

Un tel agencement est bien connu, notamment par le FR-A-2 672 270, auquel on pourra se reporter au besoin.

Les flasques supportent donc l'ensemble de goulottes, servent à l'empilage des différentes unités, et font office de parois d'extrémité pour ces goulottes.

De manière connue, à chaque goulotte est associé un élément de couvercle 4, destiné à venir s'engager dans l'ouverture de la goulotte sous-jacente de la pile.

Dans certaines unités du moulage déjà connues, ces éléments de couvercle 4 sont directement fixés, généralement par soudage, aux goulottes et/ou aux flancs 2.

L'ensemble de l'unité 1, et plus particulièrement les goulottes et les éléments de couvercle, sont réalisés dans un matériau rigide et thermiquement bon conducteur, par exemple en acier inoxydable.

Selon la présente invention, chaque goulotte 3 est fixée à l'élément de couvercle 4 associé, de manière à délimiter un conduit (ou canal) étanche 7 qui s'étend en-dessous et le long des flancs des goulottes et qui est apte à recevoir un fluide caloporteur pour le traitement, par échange thermique, des produits alimentaires contenus dans les goulottes.

Dans la forme de réalisation des figures 1 à 4, il s'agit d'un conduit 7 qui est délimité en partie supérieure par la paroi des goulottes 3 et les bandes 31 associées et, en partie inférieure, par les éléments de couvercle 4, ainsi que par des éléments intermédiaires 5. Le conduit 7 est en fait formé d'une série de conduits élémentaires qui s'étendent chacun en-dessous et, latéralement, autour d'une goulotte.

Dans la forme de réalisation représentée, chaque élément de couvercle 4 est formé d'une partie centrale horizontale 40 dont les bords longitudinaux 41 sont recourbés vers le bas.

Ces éléments de couvercle sont reliés deux à deux par les éléments intermédiaires 5. Ceux-ci comportent deux parties verticales 50 qui se raccordent aux éléments de couvercle, et qui sont reliées par une cornière 51, dont la section a la forme d'un "V" renversé.

Comme le montrent plus précisément les figures 1 et 3, le conduit 7 comporte intérieurement une série de cloisons intermédiaires 42 formant chicane. Il s'agit de cloisons verticales et s'étendant longitudinalement sous le fond de chaque goulotte 3. Elles sont fixées, par exemple soudées, à la goulotte et/ou à l'élément de couvercle associé.

Les deux conduits élémentaires extérieurs sont fermés latéralement par une cloison longitudinale 700. En bout, l'ensemble des conduits élémentaires sont obturés par les parties 22 des flasques et, au niveau des couvercles (en-dessous du décrochement 20) par des prolongements 220 de ces parties 22 (voir figure 4). Ces prolongements 220 sont soudés légèrement en biais, pour ne pas contrarier l'empilage des unités les unes sur les autres.

Comme cela est visible en particulier à la figure 3, chaque cloison 42 est interrompue de sorte qu'elle s'étend seulement sur une partie de la longueur des goulottes. De plus, les cloisons 42 de deux goulottes voisines sont disposées de telle manière que leurs passages d'extrémité sont disposés de manière alternée ce qui forme un canal en chicane. On expliquera plus loin dans la description l'intérêt d'une telle structure.

Aux deux extrémités opposées du conduit, c'est-à-dire au voisinage d'angles opposés de l'unité (voir figure 3) sont prévus des manchons débouchant 70 et 71, qui mettent en communication l'intérieur du conduit 7 avec l'extérieur. Ces manchons sont des embouts de raccordement destinés à permettre le branchement de l'unité, respectivement sur une source d'alimentation en fluide caloporteur, et sur des moyens d'évacuation de ce fluide.

Dans les flasques 2 sont prévus, en regard des zones correspondant aux conduits 7, des trous borgnes 6 débouchant vers l'extérieur. Ces trous sont destinés à autoriser la prise et la manutention des unités conformes à l'invention.

On a représenté en perspective à la figure 5, une installation 8 de moulage de produits alimentaires qui fait usage de plusieurs unités telles que celles décrites ci-dessus.

Dans l'exemple représenté, dix unités sont empilées les unes sur les autres, l'unité inférieure 1' reposant directement au sol par ses flasques 2. Bien entendu, ce nombre peut être différent.

L'installation comporte un collecteur commun 9 en forme de colonne verticale sur lequel sont branchés d'une part, des moyens d'alimentation 91 en fluide caloporteur, et d'autre part une série de tuyaux 90. Il s'agit par exemple de tuyaux flexibles. Ils sont branchés sur les manchons 70 qui équipent chacune des unités 1. Les moyens de branchement sont de préférence choisis pour permettre une connection rapide et efficace.

D'une manière similaire, l'installation comporte un second collecteur 9' qui est destiné à permettre l'évacuation du fluide hors des unités. Pour ce faire, il est pourvu d'une série de tuyaux 90' analogues aux tuyaux 90, branchés sur les manchons 71 des unités, et de moyens d'évacuation portant la référence numérique 91'.

A l'exception de l'unité supérieure - référencée 1" sur la figure 5 -, toutes les unités ont des goulottes garnies d'un produit alimentaire à traiter, par exemple d'une barre de jambon cru, emballé sous vide dans une enveloppe en matière plastique.

La fonction de l'unité supérieure 1" est d'apporter aux jambons de l'unité sous-jacente 1"', et plus précisément à la partie supérieure de ces jambons, la chaleur voulue par l'intermédiaire de ses éléments de couvercle.

Lorsque le fluide consiste en de l'eau chaude, celle-ci est fournie par un système de chauffage annexe tel qu'une chaudière.

Un système d'alimentation ad hoc, par exemple en circuit fermé, amène l'eau chaude de la chaudière à l'empilage d'unités via le collecteur 9 (flèche **F**_{**1**}, figure 5).

Le schéma de la figure 3 illustre la trajectoire du courant d'eau au sein d'une unité 1, de l'entrée 70 à la sortie 71. Cette trajectoire est symbolisée par des flèches. L'eau peut passer librement en direction transversale au-dessus des éléments 5 de section en "V" renversé (pour passer d'un conduit élémentaire à l'autre) et, en bout de cloison interrompue 42 faire demi-tour.

Les cloisons intermédiaires 42 donnent au fluide une trajectoire en chicane, qui améliore l'échange thermique. Le fluide chaud transmet une partie de sa chaleur aux parois des goulottes qui, en matériau thermiquement bon conducteur, transmettent cette chaleur aux produits alimentaires. Ainsi, on peut cuire les produits directement dans les empilages, sans avoir recours à des cellules de cuisson séparées.

Le fluide refroidi qui quitte les unités, retourne à la chaudière via le collecteur 91 (flèche **F**_{**2**}, figure 5). Ce circuit fermé de fluide est commandé et régulé en température par des moyens de type classique.

En fin de cuisson, il est possible de faire circuler un fluide froid dans les unités, de manière à refroidir les produits alimentaires en vue de leur démoulage.

A titre indicatif, lorsqu'on a affaire à des jambons, qui nécessitent généralement une température de cuisson "à coeur" de l'ordre de 65 à 70°C, on peut utiliser comme fluide caloporteur de l'eau à température comprise entre 70 et 85°C environ, le temps du traitement étant de l'ordre de 8 à 12 heures environ (en fonction de la nature, de la forme et des dimensions des jambons).

Bien entendu, la forme des goulottes et des couvercles est adaptée à celle des produits alimentaires. Ceux-ci peuvent être conditionnés sous forme de barres ou de blocs si les goulottes sont compartimentées.

Ainsi, à titre d'exemple on peut citer comme forme de section pour les goulottes, au lieu d'une section en "U", une section rectangulaire, carrée ou trapézoïdale ("V" à angle coupé) ; la section n'a pas obligatoirement une forme symétrique.

Grâce à l'invention, la cuisson se fait de manière efficace et homogène car la totalité ou la quasi-totalité de la paroi contenant chaque produit alimentaire est entourée par le fluide. En effet, la partie supérieure des produits reçoit de la chaleur provenant des goulottes de l'unité disposée juste au-dessus. Il n'y a pas de contact entre le fluide caloporteur et les produits, ce qui réduit considérablement les risques de contamination.

Bien entendu, on peut se servir des unités et de l'installation conformes à l'invention pour procéder au refroidissement, voire à la congélation de produits alimentaires, en utilisant un fluide approprié.

Dans l'exemple illustré aux figures, il est formé un conduit unique 7 pour chaque unité 1. Toutefois, il est possible de prévoir un conduit par paire de goulotte et d'élément de couvercle. Dans cette hypothèse, il est nécessaire de prévoir pour chaque unité autant de paires de manchons 70 et 71 qu'il existe de conduits.

La présente invention peut s'appliquer à tout type de produit alimentaire, qu'il soit carné ou non.

## Revendications

1. Unité de moulage et de traitement thermique de produits alimentaires, notamment pour la cuisson de jambons, qui comprend un ensemble de moules en forme de goulottes (3) disposées horizontalement, côte-à-côte et parallèlement les unes aux autres, leur fond (30) étant dirigé vers le bas et leur ouverture (32) vers le haut, à chaque goulotte (3) étant associé un élément de couvercle (4) qui s'étend en-dessous de son fond (30), cet ensemble de moules étant fixé à des moyens de support (2) qui autorisent l'empilage des unités (1), les éléments de couvercle (4) venant alors s'engager dans les ouvertures (32) de goulotte (3) d'une unité (1) sous-jacente, lesdites goulottes et lesdits éléments de couvercle étant réalisés dans un matériau thermiquement bon conducteur, caractérisée par le fait que chaque goulotte (3) est fixée à l'élément de couvercle (4) associé de manière à délimiter un conduit étanche (7) - dit élémentaire - apte à recevoir un fluide caloporteur pour le traitement, par échange thermique, des produits alimentaires contenus dans lesdites goulottes (3).

2. Unité selon la revendication 1, caractérisé par le fait que chaque conduit élémentaire (7) entoure complètement, ou à peu près complètement, la paroi d'une goulotte (3).

3. Unité selon la revendication 1 ou 2, caractérisée par le fait que les différents conduits élémentaires (7) délimités par une goulotte (3) et un élément de couvercle associé (4) communiquent entre eux de manière à former, au sein de l'unité, un seul et même conduit.

4. Unité selon l'une des revendications 1 à 3, caractérisée par le fait que les conduits élémentaires (7) sont divisés par une cloison intermédiaire interrompue (42).

5. Unité la revendication 4, caractérisée par le fait que ladite cloison (42) s'étend longitudinalement sous la goulotte associée (3) et a une longueur inférieure à celle de la goulotte, de manière à ménager un passage à une extrémité de la cloison pour le fluide caloporteur.

6. Unité selon les revendications 4 et 5 prises en combinaison, caractérisée par le fait que lesdits passages d'extrémité sont disposés de manière alternée, de manière à favoriser une circulation du fluide selon un parcours en chicane.

7. Unité selon l'une des revendications 1 à 6, caractérisée par le fait qu'elle comporte des embouts (70, 71) de raccordement à une source d'alimentation en fluide caloporteur et à des moyens d'évacuation de ce fluide.

8. Unité selon l'une des revendications 1 à 7, caractérisée par le fait que les parois transversales dudit conduit (7) comportent chacune au moins un trou borgne (6) débouchant vers l'extérieur, apte à permettre la prise et la manipulation de l'unité.

9. Installation de moulage et de traitement thermique de produits alimentaires, notamment pour la cuisson de jambons, caractérisée par le fait qu'elle comporte plusieurs unités (1) empilées conformes à l'une des revendications 1 à 8, et qu'elle est équipée d'une source (9) d'alimentation en fluide caloporteur et de moyens d'évacuation (9') de ce fluide, sur lesquels chaque unité (1) est connectée.

10. Installation selon la revendication 9, caractérisée par le fait que le fluide consiste en un liquide chaud permettant de cuire lesdits produits alimentaires.

11. Installation selon la revendication 9, caractérisée par le fait que le fluide consiste en un liquide froid permettant de refroidir ou de congeler lesdits produits alimentaires.

## Patentansprüche

1. Einheit zum Formen und zur Wärmebehandlung von Nahrungsprodukten, insbesondere zum Kochen von Schinken, welche eine Anordnung von Formen in Form von horizontal nebeneinander und zueinander parallel liegenden Rutschen (3) aufweist, wobei ihr Boden (30) nach unten und ihre Öffnung (32) nach oben gerichtet ist, wobei mit jeder Rutsche (3) ein Abdeckelement (4) verbunden ist, welches sich unterhalb des Bodens (30) erstreckt, wobei diese Anordnung von Formen an Tragvorrichtungen (2) befestigt ist, welche die Stapelung der Einheiten (1) ermöglichen, wobei die Abdeckelemente (4) dann in Eingriff mit den Öffnungen (32) der Rutschen (3) einer darunterliegenden Einheit (1) kommen, wobei die Rutschen und die Abdeckelemente aus einem gut wärmeleitenden Material hergestellt sind, dadurch gekennzeichnet, daß jede Rutsche (3) an dem zugehörigen Abdeckelement (4) derart befestigt ist, daß sie einen dichten - sogenannten elementaren - Kanal (7) bildet, der in der Lage ist, ein Wärmeübertragungsfluid für die Behandlung mittels Wärmeaustausch der in den Rutschen (3) enthaltenen Nahrungsprodukten aufzunehmen.

2. Einheit gemäß Anspruch 1, dadurch gekennzeichnet, daß jeder elementare Kanal (7) die Wand einer Rutsche (3) vollständig oder nahezu vollständig umschließt.

3. Einheit gemäß Anspruch 1 oder 2, dadurch gekennzeichnet, daß die verschiedenen elementaren Kanäle (7), die von einer Rutsche (3) und einem zugehörigen Abdeckelement (4) begrenzt sind, miteinander derart in Verbindung stehen, daß sie innerhalb der Einheit einen einzigen und selben Kanal bilden.

4. Einheit gemäß einem der Ansprüche 1 bis 3, dadurch gekennzeichnet, daß die elementaren Kanäle (7) von einer unterbrochenen Zwischenwand (42) unterteilt sind

5. Einheit gemäß Anspruch 4, dadurch gekennzeichnet, daß sich die Zwischenwand (42) in Längsrichtung unterhalb der zugehörigen Rutsche (3) erstreckt und sie eine kürzere Länge als die Rutsche derart aufweist, daß an einem Ende der Zwischenwand ein Durchgang für das Wärmeübertragungsfluid geschaffen wird.

6. Einheit gemäß den Ansprüchen 4 und 5 in Kombination, dadurch gekennzeichnet, daß die Durchgänge am Ende abwechselnd derart angeordnet sind, daß eine Zirkulation des Fluids gemäß einem Zickzackweg begünstigt wird.

7. Einheit gemäß einem der Ansprüche 1 bis 6, dadurch gekennzeichnet, daß sie Ansätze (70, 71) zum Anschluß an eine Versorgungsquelle für das Wärmeübertragungsfluid und an Vorrichtungen zum Ableiten dieses Fluids aufweist.

8. Einheit gemäß einem der Ansprüche 1 bis 7, dadurch gekennzeichnet, daß die Querwände des Kanals (7) jeweils wenigstens ein Grundloch (6) aufweisen, das nach außen mündet, und das dafür eingerichtet ist, das Greifen und die Bedienung der Einheit zu ermöglichen.

9. Anlage zum Formen und zur Wärmebehandlung von Nahrungsprodukten, insbesondere für das Kochen von Schinken, dadurch gekennzeichnet, daß sie mehrere aufeinander gestapelte Einheiten (1) gemäß einem der Ansprüche 1 bis 8 aufweist, und daß sie mit einer Quelle (9) zur Versorgung mit dem Wärmeübertragungsfluid und Vorrichtungen zum Ableiten (9') dieses Fluids ausgestattet ist, an welche jede Einheit (1) angeschlossen ist.

10. Anlage gemäß Anspruch 9, dadurch gekennzeichnet, daß das Fluid aus einer warmen Flüssigkeit besteht, welche ermöglicht die Nahrungsmittel zu kochen.

11. Anlage gemäß Anspruch 9, dadurch gekennzeichnet, daß das Fluid aus einer kalten Flüssigkeit besteht, welche ermöglicht die Nahrungsmittel zu kühlen oder einzufrieren.

## Claims

1. A unit for the molding and heat treatment of food products, particularly for the cooking of hams, which comprises an assembly of molds configured like channels (3) arranged horizontally, side by side and parallel to each other, their bottom (30) being directed downwards and their opening (32) upwards, a lid element (4) extending under the respective bottom (30) being associated with each channel (3), said assembly of molds being fixed to support means (2) which provide for the piling of units (1), the lid elements (4) being engaged in the openings (32) of the channels (3) of an underlying unit (1), said channels and said lid elements being made from a material that is a good conductor of heat, characterized in that each channel (3) is fixed to the associated lid element (4) in such a way as to delimit a fluid-tight individual conduit (7) which receives a heat-conveying fluid for the treatment, by heat exchange, of food products contained in said channels (3).

2. A unit according to claim 1 characterized in that each individual conduit (7) surrounds the wall of a channel (3) completely or almost completely.

3. A unit according to claim 1 or claim 2 characterized in that the various individual conduits (7) delimited by a channel (3) and an associated lid element (4) communicate with each other to form a single conduit within the unit.

4. A unit according to any one of claims 1 to 3 characterized in that the individual conduits (7) are divided by a discontinuous intermediate partition (42).

5. A unit according to claim 4 characterized in that said partition (42) extends longitudinally under the associated channel (3) and is shorter than the channel to leave a passage at one end of the partition for the heat-conveying fluid.

6. A unit according to claims 4 and 5 in conjunction characterized in that said end passages alternate to encourage circulation of the fluid in a chicane.

7. A unit according to any one of claims 1 to 6 characterized in that it has connectors (70, 71) for connection to a heat-conveying fluid supply and to means for evacuating the fluid.

8. A unit according to any one of claims 1 to 7 characterized in that the transverse walls of said conduit (7) each include at least one blind hole (6) with the open side facing outwards for grasping and manipulating the unit.

9. Plant for the molding and heat treatment of food products, particularly for the cooking of hams, characterized in that it includes a plurality of piled units (1) according to any one of claims 1 to 8 and in that it is equipped with a heat-conveying fluid supply (9) and with means (9') for evacuating the fluid, to each of which each unit (1) is connected.

10. Plant according to claim 9 characterized in that the fluid is a hot liquid for cooking said food products.

11. Plant according to claim 9 characterized in that the fluid is a cold liquid for chilling or freezing said food products.
